Europäisches Patentamt

European Patent Office

Office européen des brevets

(19)

(11) Numéro de publication : **0 169 289**
**B1**

# (12) FASCICULE DE BREVET EUROPÉEN

(45) Date de publication du fascicule du brevet :
09.09.87

(21) Numéro de dépôt : **84402490.1**

(22) Date de dépôt : **05.12.84**

(51) Int. Cl.⁴ : **H 02 B   1/20,** H 02 G   3/04,
**F 16 L   3/22**

(54) **Accessoire pour la fixation d'un article à un support.**

(30) Priorité : **09.12.83 FR 8319782**

(43) Date de publication de la demande :
**29.01.86 Bulletin 86/05**

(45) Mention de la délivrance du brevet :
**09.09.87 Bulletin 87/37**

(84) Etats contractants désignés :
**AT BE DE GB IT NL**

(56) Documents cités :
**DE-A- 2 717 216**
**US-A- 3 809 799**

(73) Titulaire : **LEGRAND**
**128 Avenue du Maréchal de Lattre de Tassigny**
**F-87045 Limoges Cédex (FR)**

(72) Inventeur : **Sarton, Francois**
**La Pierre St Maclou de Folleville**
**F-76890 Totes (FR)**
Inventeur : **Roby, Gérard**
**Immeuble Lyonnais Rue Boieldieu**
**F-76420 Bihorel (FR)**

(74) Mandataire : **CABINET BONNET-THIRION**
**95 Boulevard Beaumarchais**
**F-75003 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne d'une manière générale l'assujettissement d'un quelconque article à un quelconque support.

Elle vise plus particulièrement le cas où l'article à fixer est une goulotte du type de celles couramment mises en œuvre pour le guidage de conducteurs électriques dans les armoires électriques, c'est-à-dire dans les armoires ou coffrets servant au logement de quelconques appareillages électriques.

Ainsi qu'on le sait, une telle goulotte, qui est par exemple réalisée en matière synthétique, a de tradition une section transversale globalement en U, avec, dans l'axe de son fond, de place en place, à un pas régulier défini par les normes en la matière, des ouvertures propres à permettre le passage des organes de fixation nécessaires à son assujettissement à un quelconque support.

Le plus souvent, ces ouvertures sont allongées en boutonnière, suivant l'axe du fond, notamment pour permettre, mais dans une mesure limitée, l'ajustement en position de la goulotte vis-à-vis du support sur lequel elle doit être rapportée.

Pour l'essentiel, les appareillages électriques à desservir sont logés dans le corps même de l'armoire concernée, et, pour ce faire, il est préalablement mis en place, dans celle-ci, un support spécifique approprié.

Il peut s'agir, par exemple, d'une plaque perforée, c'est-à-dire d'une plaque, en général métallique, présentant un réseau d'évidements, de contour en pratique rectangulaire, séparés deux à deux par des traverses, dans une direction, et par des barrettes dans une deuxième direction, orthogonale à la précédente.

L'assujettissement d'une goulotte à une telle plaque perforée se fait, le plus souvent, à ce jour, soit à l'aide de vis, soit à l'aide de rivets.

De tels organes doivent communément être puisés dans un bac, en vrac, ce qui peut entraîner des hésitations dispendieuses, et, par maladresse, des pertes.

Lorsqu'il s'agit de vis, que ce soit des vis métalliques ou que ce soit des vis en matière synthétique, de telles vis, après traversée du fond de la goulotte et de la plaque perforée, doivent, de plus, coopérer avec un écrou, de l'autre côté de ladite plaque perforée.

Leur mise en place nécessite donc d'intervenir derrière la plaque perforée, et est de ce fait une opération en pratique peu commode à conduire et relativement longue à exécuter.

Certes, il est prévu de pouvoir les rapporter par avance sur la plaque perforée, à l'aide d'agrafes spécifiques.

Mais, l'ajustement en position de la goulotte étant limité, des tâtonnements dispendieux sont encore inévitables.

Il en est de même avec les rivets, dont la mise en œuvre nécessite en outre intempestivement un outillage particulier.

Enfin, lorsqu'ils sont métalliques, de tels organes, qu'il s'agisse de vis ou de rivets, sont normalement contraires aux exigences usuelles de sécurité, puisqu'ils conduisent en quelque sorte à l'établissement d'un pont métallique entre les conducteurs électriques contenus dans la goulotte et la plaque perforée sous-jacente, au détriment de la continuité d'isolation normalement assurée par le fond d'une telle goulotte lorsqu'elle est en matière synthétique.

Certes il est proposé, dans le brevet français déposé le 31 Janvier 1978 sous le N° 78 02643 et publié sous le numéro 2.416.577, un dispositif de fixation qui, permettant d'assujettir une goulotte à une plaque perforée, évite dans une certaine mesure les inconvénients rappelés ci-dessus.

Mais ce dispositif de fixation formant en quelque sorte un étrier dont les branches doivent enserrer les ailes de la goulotte à assujettir, en s'encliquetant dans celles-ci à la faveur des fentes qu'elles présentent usuellement pour la traversée du ou des conducteurs électriques concernés, il ne convient bien qu'à des goulottes spécifiques, ses dimensions devant être adaptées à celles de celles-ci.

Il ne s'agit donc que d'un dispositif de fixation d'utilisation pratique très limitée.

Par ailleurs, concurremment aux armoires électriques équipées d'une plaque perforée, il existe des armoires électriques qui, pour le support des appareillages électriques qu'elles doivent contenir, sont équipées d'un châssis formé par deux montants latéraux sur lesquels sont rapportés, transversalement, en hauteur, des profilés, en général métalliques, appropriés à un tel support.

Il s'agit, en pratique, de profilés présentant globalement une section transversale en U, avec des ailes munies de retours en équerre pour l'encliquetage des appareillages électriques concernés, qu'il s'agisse d'ailes de hauteurs égales l'une à l'autre, leurs retours en équerre étant alors usuellement dirigés vers l'extérieur, ou qu'il s'agisse d'ailes de hauteurs inégales l'une par rapport à l'autre, leurs retours en équerre étant alors usuellement dirigés vers l'intérieur.

Si de tels profilés conviennent bien à la fixation d'appareillages électriques, il n'en est pas de même pour les goulottes destinées au logement des conducteurs électriques nécessaires à la desserte de ceux-ci.

Outre la nécessité même de tels profilés pour le support de goulottes, il faut dès lors rapporter sur ceux-ci des organes d'adaptation, pour pouvoir y assujettir les goulottes à fixer.

Mais, cet assujettissement se faisant comme précédemment à l'aide de vis ou de rivets, et, en pratique, le plus souvent à l'aide de vis, il conduit aux mêmes inconvénients, et, notamment, aux inconvénients d'hésitation, de maladresse, et de tâtonnement, que ceux évoqués ci-dessus.

Par ailleurs, indépendamment des appareillages électriques logés dans le corps des armoires électriques concernées, la porte même de celles-ci est usuellement équipée en façade d'organes électriques tels que voyants lumineux, boutons poussoirs, manettes de commande, ou autre appareils de visualisation et/ou de commande, convenablement desservis par des conducteurs électriques dont il s'agit d'assurer le cheminement le long d'une telle porte.

Si certains de ces conducteurs, convenablement toronnés avec d'autres et convenablement liés à ceux-ci par des colliers de serrage, forment des ensembles assez rigides pour pouvoir garder d'eux-mêmes une configuration stable au contact même de la porte, sans risque de cheminement trop anarchique ou aléatoire par rapport à celle-ci, il n'en est pas nécessairement de même pour tous, et, pour leur protection, aussi bien que pour éviter que, venant plus ou moins s'interposer sur l'accès au volume intérieur de l'armoire lors de l'ouverture de sa porte, ils ne soient pas par inadvertance l'objet d'une traction susceptible de conduire à leur arrachement, il est le plus souvent nécessaire de les fixer à celle-ci.

Mais, pour des raisons de sécurité et d'étanchéité, il convient conjointement de préserver l'intégrité de cette porte, ce qui proscrit l'exécution d'un quelconque perçage dans celle-ci pour la fixation recherchée, seuls étant admis les perçages indispensables à la mise en place sur une telle porte des organes électriques, ou autre organes d'équipement, qu'elle doit porter.

Le plus souvent, à ce jour, la fixation à cette porte des conducteurs électriques desservant ces organes se fait par collage, par l'intermédiaire soit d'embases adhésives appropriées à cet effet, dont la tenue est en pratique médiocre, soit de goulottes convenablement collées, dont la tenue est satisfaisante, mais qui nécessitent pour leur pose une opération de collage relativement complexe.

Certes, il est également possible, pour la fixation d'une goulotte à une porte d'armoire, de rapporter sur celle-ci, le long de ses bords, des montants propres à la fixation d'un profilé sur lequel peut être assujettie une telle goulotte.

Mais, outre la nécessité de mettre ainsi en œuvre des montants et un profilé, l'assujettissement à ce dernier d'une goulotte nécessite comme précédemment des organes d'adaptation, avec les inconvénients précisés ci-dessus.

Certes, également, il a été proposé, dans la demande de brevet français déposée le 18 Novembre 1981 sous le numéro 81 21729 et publiée sous le numéro 2.516.713, de tirer profit, pour l'assujettissement d'une goulotte à une porte d'armoire électrique, d'un des perçages affectant déjà une telle porte pour l'implantation des organes électriques, ou autres organes d'équipement, qu'elle doit porter.

Il est mis en œuvre, à cet effet, une patte de fixation qui, d'une part présente un passage lui permettant d'être assujettie à la porte concernée par simple pincement entre les deux éléments usuellement constitutifs d'un organe électrique à rapporter sur cette porte, et qui, d'autre part, comporte un trou fileté pour la fixation d'une goulotte.

Avec une telle patte de fixation, la mise en place d'une goulotte se fait donc par vissage, avec, tel que rappelé ci-dessus, les inconvénients inhérents à un tel mode de montage.

En outre, dans un tel cas, les organes électriques à rapporter sur la porte à équiper doivent impérativement être implantés au pas des ouvertures présentes sur le fond de la goulotte à fixer, ce qui peut constituer une sujétion intempestive.

Ainsi, dans tous les cas, qu'il s'agisse de la fixation d'une goulotte sur une plaque perforée ou qu'il s'agisse de sa fixation sur un profilé ou sur une porte d'armoire électrique, et indépendamment des inconvénients spécifiques inhérents à chacun de ces supports, des tâtonnements sont à craindre lors de la mise en place d'une goulotte, compte tenu, d'une part, de ce que l'extension limitée des ouvertures du fond de celle-ci n'en permet qu'un ajustement en position réduit par rapport à un tel support, et compte tenu, d'autre part, de ce qu'il est le plus souvent nécessaire d'intervenir quasi simultanément sur la goulotte et sur ce support.

Certes, cet inconvénient se trouve évité avec l'embase de fixation faisant l'objet de la demande de brevet français déposée le 27 Décembre 1982 sous le N° 82 21807 aussi bien que du premier certificat d'addition N° 83 14758 du 16 Septembre 1983 rattaché à celle-ci.

Mais cette embase de fixation ne convient que pour l'assujettissement d'une goulotte à un profilé, pour lequel elle a été spécifiquement prévue.

Elle ne convient pas dans le cas où cet assujettissement doit se faire à une plaque perforée ou à une porte d'armoire électrique ou à un montant de châssis.

La présente invention a d'une manière générale pour objet une disposition qui, susceptible d'être mise en œuvre aussi bien dans un accessoire de fixation propre à l'assujettissement d'une goulotte à une plaque perforée que dans un accessoire de fixation propre à son assujettissement à une porte d'armoire électrique ou à un montant de châssis, permet d'éviter les inconvénients des accessoires de fixation usuels en la matière, et conduit en outre à d'autres avantages.

De manière plus précise, elle a pour objet un accessoire de fixation propre à l'assujettissement d'un quelconque article, par exemple goulotte ou conduit, à un quelconque support, par exemple plaque perforée, montant de châssis ou porte d'armoire, notamment pour appareillage électrique, caractérisé en ce qu'il est constitué de deux pièces distinctes, à savoir, d'une part, une embase de support, qui est munie de moyens de fixation propres à en permettre l'assujettissement au support concerné, et, d'autre part, une tête de liaison, qui est munie de moyens de fixation propres à en permettre l'assujettissement à l'article à assujettir audit support, ladite embase de support et ladite tête de liaison étant conjointement dotées de moyens d'encliquetage complémentaires propres à leur assujettissement l'une à l'autre.

Ainsi, l'embase de support étant fixée au support concerné, d'une part, et, la tête de liaison étant elle-même fixée à l'article concerné, d'autre part, indépendamment de la fixation de l'embase de support au support ; il n'est pas nécessaire d'intervenir simultanément sur ce dernier et sur la goulotte pour l'assujettissement de cette goulotte à celui-ci.

Il suffit de rapprocher la goulotte, munie de sa tête de liaison, de l'embase de support préalablement rapportée sur le support concerné, jusqu'à accouplement l'une à l'autre de cette tête de liaison et de cette embase de support, et cet accouplement se faisant par simple encliquetage, il s'agit, dans son ensemble, d'une opération particulièrement aisée et rapide à conduire.

De préférence, les moyens d'encliquetage dont est dotée l'embase de support sont allongés, en sorte que, tout en étant assujettie par eux à ladite embase de support, la tête de liaison peut se déplacer librement par rapport à celle-ci, parallèlement à leur sens d'allongement.

Il en résulte avantageusement une possibilité étendue d'ajustement en position de la goulotte par rapport à son support, ce qui supprime tout tâtonnement à la mise en place de celle-ci, et ce qui, en outre apporte une solution particulièrement simple au problème d'une éventuelle incompatibilité entre entraxes à respecter, à savoir, d'une part le pas des ouvertures que présente le fond d'une goulotte, et celui que peuvent également présenter les ouvertures ou évidements du support auquel elle doit être assujettie.

En pratique, lorsque le support sur lequel doit ainsi être rapportée une goulotte est une plaque perforée, l'embase de support de l'accessoire de fixation suivant l'invention comporte au moins deux pattes de fixation propres à son encliquetage sur cette plaque perforée, l'une au moins desdites pattes de fixation étant à cet effet élastiquement déformable.

Autrement dit, dans un tel cas, les moyens de fixation prévus sur l'embase de support pour en permettre l'assujettissement à une telle plaque perforée sont constitués par des pattes dont une au moins est élastiquement déformable.

Suivant un développement de l'invention, une disposition de même type peut avantageusement être adoptée pour l'assujettissement d'une telle embase de support à un montant de châssis.

En effet, de tels montants de châssis comportent usuellement, de place en place, à un pas régulier, des ouvertures ou perforations.

Il suffit donc de doter, dans ce cas, l'embase de support de l'accessoire de fixation suivant l'invention de deux pieds de fixation propres à être engagés dans de telles ouvertures ou perforations, de tels pieds de fixation permettant ainsi l'assujettissement d'une telle embase de support par simple encliquetage sur le montant de châssis concerné.

Dès lors, lorsque, au lieu d'être équipée d'une plaque perforée, l'armoire électrique concernée est équipée d'un châssis, il n'est avantageusement plus nécessaire de mettre en œuvre un quelconque profilé pour la fixation d'une goulotte.

En effet, celle-ci peut directement être fixée aux montants d'un tel châssis, à l'aide de deux accessoires de fixation suivant l'invention, chacun respectivement mis en œuvre à ses extrémités.

Enfin, lorsqu'il s'agit de l'assujettissement d'une telle goulotte ou d'un quelconque autre article, à la porte d'une armoire électrique, l'embase de support de l'accessoire de fixation suivant l'invention peut très simplement présenter latéralement une semelle de fixation propre à être assujettie à ladite porte par simple pincement entre deux éléments constitutifs d'un quelconque organe électrique ou autre organe d'équipement à rapporter sur celle-ci, comme mentionné ci-dessus.

Comme précédemment, la mobilité de la tête de liaison correspondante par rapport à cette embase de support permet avantageusement une indépendance quasi totale entre l'implantation de cet organe électrique et le pas des ouvertures que présente le fond de la goulotte.

Les caractéristiques et avantages de l'invention ressortiront d'ailleurs de la description qui va suivre, à titre d'exemple, en référence aux dessins schématiques annexés sur lesquels :

la figure 1　est une vue en perspective éclatée d'un accessoire de fixation suivant l'invention ;

la figure 2　est une vue en plan de l'embase de support que comporte cet accessoire de fixation, suivant la flèche II de la figure 1 ;

la figure 3　est une vue en coupe transversale de cette embase de support, suivant la ligne III-III de la figure 2 ;

la figure 4　en est une vue de bout, suivant la flèche IV de la figure 2 ;

la figure 5　en est une vue en élévation, suivant la flèche V de la figure 2 ;

la figure 6　en est une vue partielle en coupe transversale, suivant la ligne VI-VI de la figure 4 ;

la figure 7　est une vue en plan, suivant la flèche VII de la figure 1, de la tête de liaison associée à cette embase de support au sein de l'accessoire de fixation suivant l'invention ;

la figure 8　est, à échelle supérieure, une vue en coupe transversale de cette tête de liaison, suivant la ligne VIII-VIII de la figure 7 ;

la figure 9　est une vue en perspective illustrant la mise en œuvre de l'accessoire de fixation suivant l'invention pour l'assujettissement d'une goulotte à une plaque perforée ;

la figure 10　est une vue partielle en coupe transversale illustrant cet assujettissement ;

la figure 11　est une vue analogue à celle de la figure 3, pour une variante de réalisation de l'embase de support de l'accessoire de fixation suivant l'invention ;

la figure 12　est une vue partielle en coupe transversale de cette variante, suivant la ligne XII-XII de la figure 11 ;

la figure 13 en est une vue partielle en plan, suivant la flèche XIII de la figure 12 ;

la figure 14　en est une autre vue partielle en coupe transversale, suivant la ligne XIV-XIV de la figure 13 ;

la figure 15 est, à échelle différente, une vue en coupe transversale de la tête de liaison susceptible d'être associée à cette embase de support ;

la figure 16 est une vue en perspective analogue à celle de la figure 9, pour une variante de mise en œuvre de l'accessoire de fixation suivant l'invention ;

la figure 17 est une vue en perspective relative à une variante de réalisation de l'accessoire de fixation suivant l'invention propre à l'assujettissement d'une goulotte à une porte d'armoire électrique ;

la figure 18 est une vue en coupe transversale, suivant la ligne XVIII-XVIII de la figure 17, de l'embase de support que comporte dans ce cas l'accessoire de fixation suivant l'invention ;

la figure 19 est une vue en perspective illustrant une autre variante de réalisation de l'accessoire de fixation suivant l'invention propre à l'assujettissement d'une ou plusieurs goulottes à un montant de châssis.

Tel que mentionné ci-dessus, ces figures illustrent d'une manière générale l'application de l'invention à l'assujettissement, à un support précisé ultérieurement, d'au moins une goulotte 10 propre à canaliser le cheminement de câbles ou autres conducteurs électriques nécessaires à la desserte de quelconques organes d'équipement ou appareillages électriques.

Une telle goulotte 10 est bien connue par elle-même, et ne faisant pas en propre l'objet de la présente invention, elle ne sera pas décrite dans tous ses détails ici.

Il suffira d'indiquer que, comportant un fond 11 et deux ailes 12, elle présente transversalement un profil en U, et que, de manière usuelle, son fond 11 présente longitudinalement, de place en place, à un pas régulier, suivant sa ligne médiane, des ouvertures 13 chacune allongée longitudinalement en forme de boutonnière.

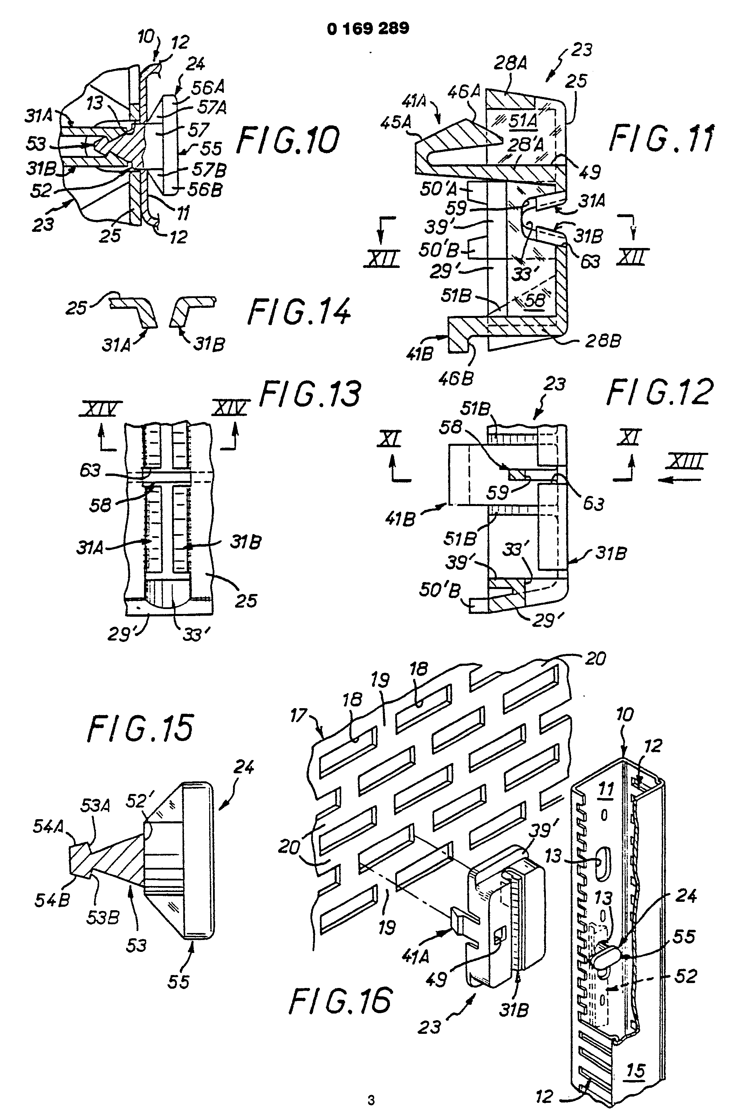

Dans la forme de réalisation représentée, figures 9, 12, 17 et 19, les ailes 12 d'une telle goulotte 10 sont de place en place elles-mêmes affectées transversalement d'échancrures 14, pour traversée des câbles ou conducteurs électriques dont elle doit assurer le cheminement, et, pour la protection et la retenue de ceux-ci, il lui est associé un couvercle 15 coiffant l'extrémité de ses dites ailes 12.

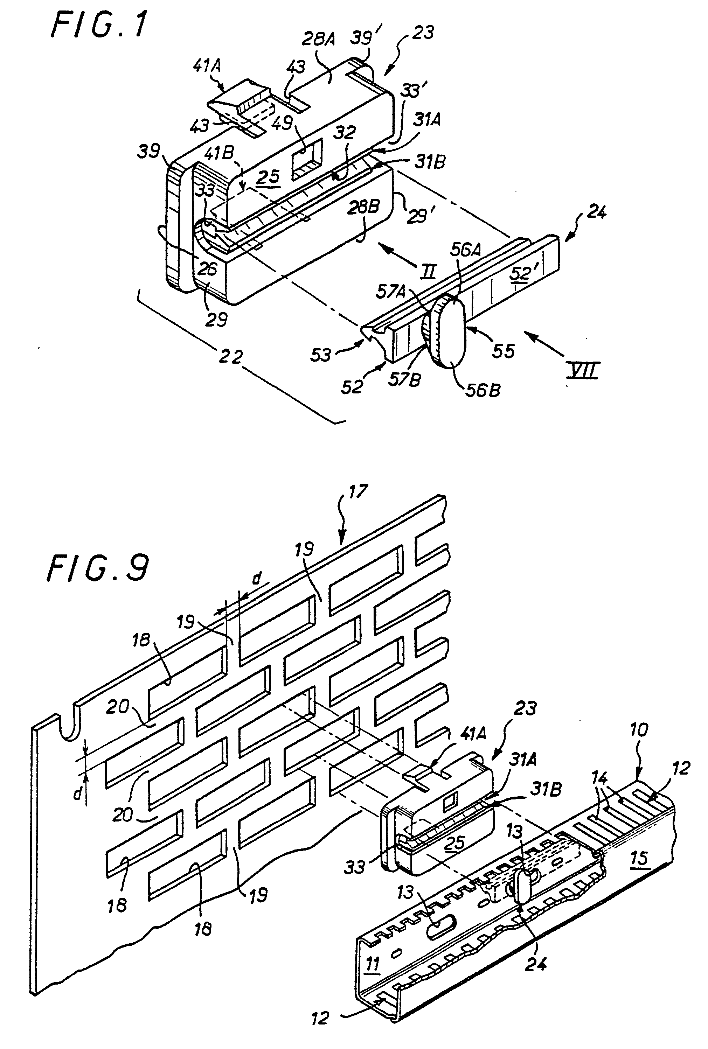

Dans l'application de l'invention plus particulièrement illustrée par les figures 1 à 12, le support auquel doit être assujettie une telle goulotte 10 est une plaque perforée 17, c'est-à-dire une plaque présentant un réseau d'évidements 18 séparés deux à deux, dans un premier sens, par des barrettes 19, et dans un deuxième sens, orthogonal au précédent, par des traverses 20.

En pratique, dans la forme de réalisation représentée, ces évidements 18 ont un contour rectangulaire, ils sont décalés en quinconce les uns par rapport aux autres d'une rangée à une autre, et les barrettes 19 et traverses 20 qui les séparent ont sensiblement même largeur ou hauteur d.

L'accessoire de fixation 22 mis en œuvre suivant l'invention pour l'assujettissement d'une goulotte 10 à une telle plaque perforée 17 est d'une manière générale caractérisé en ce qu'il est constitué de deux pièces distinctes, à savoir, d'une part, une embase de support 23, qui est munie de moyens de fixation propres à en permettre l'assujettissement à une telle plaque perforée 17, et, d'autre part, une tête de liaison 24, qui est munie de moyens de fixation propres à en permettre l'assujettissement à la goulotte 10 à assujettir à celle-ci, ladite embase de support 23 et ladite tête de liaison 24 étant conjointement dotées de moyens d'encliquetage complémentaires propres à leur assujettissement l'une à l'autre.

L'embase de support 23 se présente sous la forme générale d'une plaquette de contour quadrangulaire, à angles arrondis.

Elle forme, en façade, une platine 25, de surface sensiblement plane, pour appui de la goulotte 10, et, en surface inférieure, parallèlement à la platine 25, une semelle 26, pour appui sur la plaque perforée 17.

Dans la forme de réalisation représentée, cette embase de support 23 est creuse, l'évidement 27 correspondant débouchant du côté de sa semelle 26, en sorte que, pour l'essentiel, et abstraction faite de compléments précisés ultérieurement, cette semelle 26 est formée par la seule tranche des parois, longitudinales 28A, 28B, d'une part, et transversales 29, 29', d'autre part, bordant latéralement la platine 25, sensiblement perpendiculairement à celle-ci.

En pratique, les moyens d'encliquetage dont est dotée cette embase de support 23 pour que la tête de liaison 24 associée puisse lui être assujettie sont allongés, longitudinalement, c'est-à-dire parallèlement aux parois latérales longitudinales 28A, 28B, le long de la ligne médiane de la platine 25.

Il s'agit de deux dents d'encliquetage 31A, 31B qui, allongées parallèlement à une fente 32 prévue à cet effet sur la platine 25 pour leur donner accès, forment elles-mêmes les lèvres d'une fente.

Dans la forme de réalisation représentée, la fente 32 de la platine 25 partage longitudinalement en deux celle-ci, et elle se prolonge, par des échancrures 33, 33', sur une portion de la hauteur des parois latérales transversales 29, 29' correspondantes.

De plus, les dents d'encliquetage 31A, 31B, qui sont établies en pratique en retrait par rapport à la platine 25, s'étendent longitudinalement sensiblement sur toute la longueur de la fente 32 de celle-ci, entre les parois latérales transversales 29, 29'.

Dans la forme de réalisation plus particulièrement représentée sur les figures 1 à 10, les dents d'encliquetage 31A, 31B sont identiques entre elles, et, distinctes de la platine 25, elles sont dirigées vers celle-ci à compter du volume intérieur de l'embase de support 23.

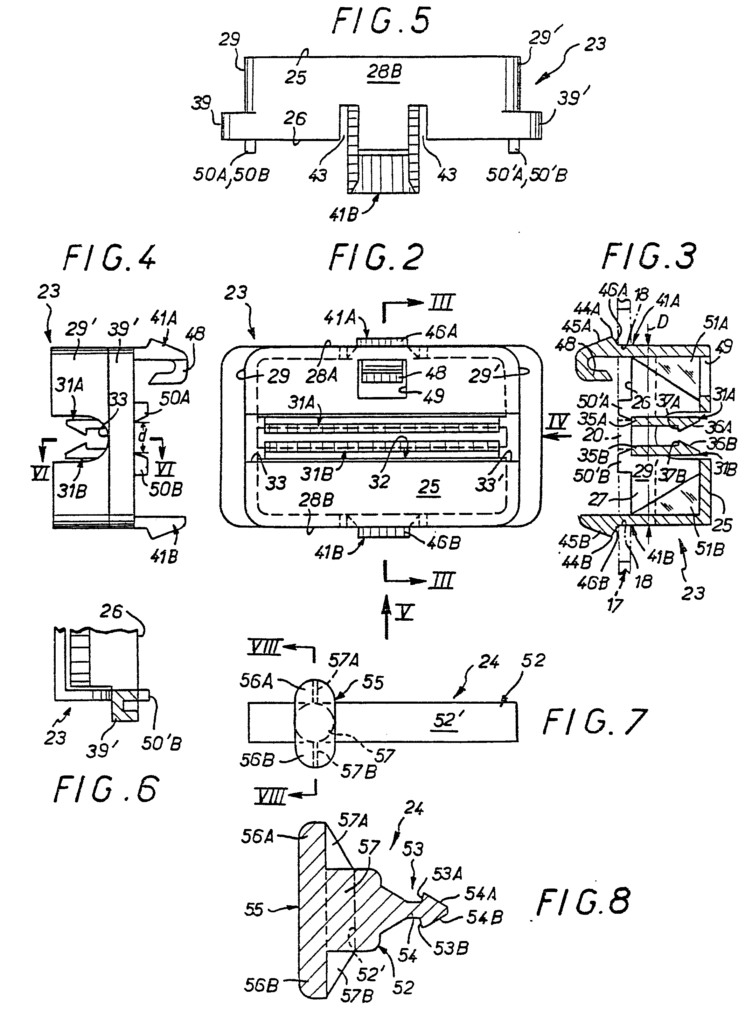

En pratique, elles forment les extrémités de plaquettes 35A, 35B qui s'étendent parallèlement l'une à l'autre d'une des parois transversales 29, 29' à l'autre, en continu à compter de la semelle 26, et en participant, donc, par leur tranche, à la constitution de celle-ci, figure 3.

De manière symétrique l'une par rapport à l'autre, les dents d'encliquetage 31A, 31B comportent un pan oblique d'engagement 36A, 36B et un cran de retenue 37A, 37B recoupant ce pan d'engagement 36A, 36B.

Compte tenu des échancrures 33, 33' des parois latérales transversales 29, 29', dans le contour hors-tout desquelles en projection latérale, figure 4, elles sont établies, elles sont l'une et l'autre élastiquement déformables.

De préférence, et tel que représenté, l'embase de support 23 présente transversalement, à la base de l'une au moins de ses parois latérales transversales 29, 29', et, en pratique, à la base de chacune de celles-ci, en dessous de l'échancrure 33, 33' correspondante, et donc à chacune des extrémités de la fente que forment la platine 25 et les dents d'encliquetage 31A, 31B, une banquette de raidissement, respectivement 39, 39'.

Dans les formes de réalisation représentées sur les figures 1 à 12, les banquettes de raidissement 39, 39' que présente ainsi l'embase de support 23 sont extérieures au volume interne de celle-ci, en faisant saillie extérieurement sur ses parois latérales transversales 29, 29' correspondantes.

En pratique, une telle banquette de raidissement 39, 39', qui est creuse, avec son évidement ouvert vers la semelle 26, s'étend à compter de ladite semelle 26, en participant donc, par sa tranche, à la constitution de celle-ci.

Dans les formes de réalisation représentées, les moyens de fixation que comporte l'embase de support 23 pour son assujettissement à la plaque perforée 17 sont constitués par deux pattes de fixation 41A, 41B propres à son encliquetage sur une telle plaque perforée 17.

En pratique, ces pattes de fixation 41A, 41B s'étendent en saillie à compter de la semelle 26, au droit de la zone médiane des parois latérales longitudinales 28A, 28B correspondantes.

L'une au moins d'entre elles est élastiquement déformable.

Dans la forme de réalisation plus particulièrement représentée sur les figures 1 à 10, il en est ainsi pour l'une et l'autre des pattes de fixation 41A, 41B.

Pour ce faire, chacune d'elles est en pratique formée par un prolongement de la paroi latérale longitudinale 28A, 28B correspondante, en s'enracinant dans la hauteur de celle-ci, entre des fentes 43 la délimitant, latéralement, sur la portion de hauteur correspondante d'une telle paroi latérale longitudinale 28A, 28B.

Chacune d'elles comporte, en saillie vers l'extérieur, un bourrelet de retenue 44A, 44B, formé par un pan oblique d'engagement 45A, 45B et un cran de retenue 46A, 46B recoupant ce pan d'engagement 45A, 45B.

Dans la forme de réalisation plus particulièrement représentée sur les figures 1 à 10, l'une des pattes de fixation 41A, 41B ainsi constituées, et il s'agit en pratique de la patte de fixation 41A, se prolonge par un retour en forme de crosse 48, qui se développe en direction du volume interne de l'embase de support 23, à l'aplomb d'un évidement 49, de contour quadrangulaire, prévu, pour lui donner accès, dans la platine 25 de cette embase de support 23.

En pratique, l'embase de support 23 comporte encore, en saillie sur sa semelle 26, et plus précisément sur la tranche de ses parois latérales transversales 29, 29', au moins une paire de picots.

Dans la forme de réalisation représentée, il est ainsi prévu, en saillie sur la tranche de chacune des parois latérales transversales 29, 29', en correspondance de l'une à l'autre de celles-ci, une paire de picots, respectivement 50A, 50B, 50'A, 50'B.

Au sein d'une même paire, les picots 50A, 50B et 50'A, 50'B ont leurs tranches en regard obliques l'une par rapport à l'autre, en convergeant l'une vers l'autre en direction de la semelle 26.

Bien entendu, la distance D entre les parois latérales longitudinales 28A, 28B, et donc entre les pattes de fixation 41A, 41B correspondantes, mesurée entre les surfaces externes de celles-ci, est sensiblement égale à celle séparant les bords opposés de deux évidements 18 adjacents de la plaque perforée 17 en englobant une traverse 20 de celle-ci.

De même, la distance d entre deux picots 50A, 50B, 50'A, 50'B d'une même paire est sensiblement égale à la largeur ou hauteur des barrettes 19 et traverses 20 de la plaque perforée 17.

Enfin, dans la forme de réalisation plus particulièrement représentée sur les figures 1 à 10, l'embase de support 23 comporte intérieurement, pour chacune de ses pattes de fixation 41A, 41B, deux nervures de raidissement 51A, 51B qui encadrent une telle patte de fixation 41A, 41B en reliant en triangle la platine 25 à la paroi latérale longitudinale 28A, 28B correspondante.

Dans la forme de réalisation représentée sur les figures 1 à 12, la tête de liaison 24 associée à l'embase de support 23 comporte un corps 52, qui, à l'image de la fente 32 de la platine 25 de cette embase de support 23, est lui aussi allongé, en forme de réglette.

Les moyens d'encliquetage qu'il comporte pour coopération avec les dents d'encliquetage 31A, 31B de l'embase de support 23 sont constitués par un bossage d'encliquetage 53 qui, longitudinalement, forme une nervure en saillie sur la réglette constituant son corps 52, sur l'une des faces principales de celle-ci, suivant la ligne médiane de cette face, et qui, transversalement, a une section en pointe de flèche propre à coopérer, avec serrage, avec lesdites dents d'encliquetage 31A, 31B.

Ce bossage d'encliquetage 53 présente donc, transversalement, au-delà d'un col 54 de largeur réduite, supérieure toutefois à celui formé au repos par les dents d'encliquetage 31A, 31B de l'embase de support 23, des crans de retenue 53A, 53B recoupant chacun respectivement des pans obliques d'engagement 54A, 54B.

Pour assujettissement à la goulotte 10, la tête de liaison 24 comporte, comme moyen de fixation, en saillie sur la surface plane 52' que constitue son corps 52, de l'autre côté de celui-ci par rapport à son bossage d'encliquetage 53, un bossage de fixation 55, qui, allongé transversalement par rapport audit corps 52, et donc par rapport audit bossage d'encliquetage 53, en formant de part et d'autre de celui-ci deux bras 56A, 56B, se raccorde à ladite surface plane 52' par un col 57.

En plan, le contour de bossage de fixation 55 est complémentaire de celui des ouvertures 13 de la goulotte 10, tout en étant inférieur à ce dernier, et il enveloppe le contour du col 57 associé.

Ainsi, le bossage d'encliquetage 55 de la tête de liaison 24 est propre, d'abord, à l'engagement de la tête de liaison 24 sur la goulotte 10, à la faveur d'une ouverture 13 du fond 11 de celle-ci, cette tête de liaison 24 étant à cet effet présentée transversalement par rapport à ce fond 11, sur la face externe de celui-ci, puis à la venue en prise de cette tête de liaison 24 avec ladite goulotte 10, par simple rotation d'un quart de tour par rapport à celle-ci après un tel engagement, ladite tête de liaison 24 venant alors s'aligner, par son corps 52, suivant la ligne médiane du fond 11 de la goulotte 10, cependant que, de l'autre côté de ce fond 11 les bras 56A, 56B de son bossage de fixation 55 mordent sur ledit fond 11, en dépassant latéralement du contour de l'ouverture 13 concernée de celui-ci.

En pratique, tel qu'illustré à la figure 10, et pour adaptation éventuelle à des différences d'épaisseur de fond 11 pour la goulotte 10, il est prévu, sur la face inférieure de ces bras 56A, 56B, des nervures 57A, 57B, qui, élastiquement déformables, raccordent en triangle ces bras 56A, 56B au col 57 associé, et qui sont susceptibles de se déformer lors de l'engagement de la tête de liaison 24 sur la goulotte 10 suivant le processus décrit ci-dessus.

Ainsi qu'on l'aura noté, cet engagement se fait très rapidement et très aisément, sans aucun tâtonnement, seules étant à manipuler la tête de liaison 24 et la goulotte 10.

De même, la fixation sur la plaque perforée 17 d'une embase de support 23 se fait très rapidement et aisément, sans aucun tâtonnement.

Il suffit, à cet effet, d'engager, par ses pattes de fixation 41A, 41B, cette embase de support 23 sur la plaque perforée 17, à la faveur de deux évidements 18 adjacents de celle-ci.

Un tel engagement se trouve facilité par les pans obliques 45A, 45B que comportent à cet effet ces pattes de fixation 41A, 41B, d'une part, aussi bien que, d'autre part, par les picots 50A, 50B, 50'A, 50'B qui, de leur côté, viennent coiffer la traverse 20 intermédiaire entre les évidements 18 concernés de la plaque perforée 17.

Il suffit, enfin, pour l'assujettissement de la goulotte 10 à cette plaque perforée 17, d'assujettir à l'embase de support 23 portée par la plaque perforée 17 la tête de liaison 24 portée par la goulotte 10.

N'impliquant qu'un simple encliquetage, qui peut aisément être conduit en aveugle si nécessaire, cet assujettissement se fait lui aussi très aisément et rapidement.

Ainsi qu'on le notera, tout en étant assujettie à l'embase de support 23 par sa nervure d'encliquetage 53, la tête de liaison 24 peut se déplacer librement par rapport à celle-ci, parallèlement à son sens d'allongement.

Il en résulte une grande capacité d'ajustement en position possible de la goulotte 10 par rapport à la plaque perforée 17.

Celle-ci se trouve encore accrue par le fait que, suivant une forme de réalisation préférée, et tel que représenté, le bossage de fixation 55 que comporte la tête de liaison 24 est décalé longitudinalement par rapport à la zone médiane de la réglette que forme le corps 52 de celle-ci, et dont par rapport à son bossage d'encliquetage 53, ce qui peut permettre, longitudinalement, un éventuel déport de la tête de liaison 24 par rapport à l'embase de support 23, d'un côté de celle-ci, tout en conservant le bossage de fixation 55 de cette tête de liaison 24 dans le contour hors-tout de la platine 25 de cette embase de support 23.

En outre, compte tenu de cette grande capacité d'ajustement en position de la goulotte 10 par rapport à la plaque perforée 17, l'implantation sur cette goulotte 10 de la tête de liaison 24, d'une part, aussi bien que celle de l'embase de support 23 par rapport à la plaque perforée 17, d'autre part, peuvent en pratique n'être que plus ou moins approximatives, ce qui réduit encore les tâtonnements lors de leurs mises en places respectives sur la goulotte 10 et la plaque perforée 17.

Autrement dit, il est avantageusement possible, grâce à l'invention, de se satisfaire d'une implantation approximative, et donc rapide, de l'embase de support 23 et/ou de la tête de liaison 24 qui lui est associée.

En pratique, pour l'assujettissement de la goulotte 10 à la plaque perforée 17 deux ou plusieurs accessoires de fixation 22 suivant l'invention sont mis en œuvre, suivant la longueur de cette goulotte 10.

Après un tel assujettissement, la position de la goulotte 10 par rapport à la plaque perforée 17 se trouve fermement assurée, en raison, notamment, de l'action de freinage exercée par serrage, par les dents d'encliquetage 31A, 31B de chaque embase de support 23 mise en œuvre, sur la nervure d'encliquetage 53 des têtes de liaison 24 correspondantes, un tel freinage s'opposant avantageusement à tout déplacement longitudinal intempestif trop aisé desdites têtes de liaison 24 par rapport à leurs embases de support 23 respectives.

Mais, si désiré, il est toujours possible de faire coulisser à la main la goulotte 10 par rapport à la plaque perforée 17, de manière à ce que, les têtes de liaison 24 qu'elle porte échappant alors aux embases de support 23 correspondantes, elles puissent être libérées par rapport à cette plaque perforée 17.

Conjointement, chaque embase de support 23 peut elle-même être dégagée de la plaque perforée 17, à l'aide de la lame d'un quelconque outil, un tournevis par exemple, en venant agir à cet effet sur le retour en forme de crosse 48 associé à la patte de fixation 41A d'une telle embase de support 23.

Suivant la variante de réalisation représentée sur les figures 11 à 14, seule cette patte de fixation 41A est élastiquement déformable, la patte de fixation 41B associée étant alors suffisamment massive pour être relativement rigide, aucune fente n'étant en outre prévue pour son enracinement dans la paroi latérale transversale 28B correspondante, elle-même épaissie en conséquence.

En pratique, le cran de retenue 46B que comporte cette patte de fixation 41B est droit, sensiblement perpendiculairement à ladite patte de fixation 41B, et sans pan oblique d'engagement, la mise en place sur une plaque perforée 17 se faisant par crochetage sur celle-ci par une telle patte de fixation 41B puis par pivotement autour de l'arête concernée de l'évidement 18 correspondant de ladite plaque perforée 17, jusqu'à encliquetage de la patte de fixation 41A associée.

En outre, dans cette variante de réalisation, cette patte de fixation 41A, qui est donc la seule élastiquement déformable, est formée, non pas par un prolongement de la paroi latérale longitudinale 28A, mais par un retour en forme de crosse prolongeant localement, au droit de l'évidement 49 de la platine 25, une paroi intermédiaire 28'A, parallèle à ladite paroi transversale longitudinale 28A.

Elle comporte un pan oblique d'engagement 45A, et le cran de retenue 46A qui lui fait suite est lui aussi très largement en oblique, en formant un dièdre ouvert avec le pan oblique d'engagement 45A.

Comme précédemment, des nervures de raidissement 51A, 51B encadrent les pattes de fixation 41A, 41B ainsi constituées ; elles sont en triangle pour la patte de fixation 41B, comme précédemment, mais elles sont en rectangle pour la patte de fixation 41A, en reliant alors à la platine 25 tant la paroi transversale latérale 28A que la paroi intermédiaire 28'A.

Comme précédemment, également, il est prévu une banquette de raidissement 39, 39' à chacune des extrémités de la fente que forment la platine 25 et les dents d'encliquetage 31A, 31B ; mais, dans cette variante, ces banquettes de raidissement 39, 39' sont à l'intérieur du volume interne de l'embase de support 23 concernée, en faisant saillie en direction l'une de l'autre sur la surface interne des parois latérales transversales 29, 29' correspondantes, et, en outre, elles n'ont qu'une extension limitée, en n'affectant que la partie médiane desdites parois latérales transversales 29, 29', sensiblement au droit des picots 50A, 50'A, 50B, 50'B correspondants.

De plus, dans cette variante, il est prévu transversalement, dans le volume interne de l'embase de support 23 concernée, sensiblement parallèlement à ses parois latérales transversales 29, 29', un raidisseur 58, qui relie la paroi intermédiaire 28'A à la paroi latérale longitudinale 28B.

Il s'agit en pratique d'une cloison qui, sensiblement perpendiculaire aux parois 28'A, 28B qu'elle relie, et enracinée sur la surface interne de la platine 25, présente, au droit des dents d'encliquetage 31A, 31B, à la manière des parois latérales longitudinales 29, 29', mais avec, latéralement, une ampleur supérieure à celle de celles-ci, une échancrure 59.

Ce raidisseur a pour double avantage, d'une part, d'améliorer la résistance à l'arrachement tant de la patte de fixation 41A que de la patte de fixation 41B, et d'autre part, de renforcer la résistance d'ensemble de l'embase de support 23 concernée.

Par ailleurs, dans la variante de réalisation représentée sur les figures 11 à 14, les dents d'encliquetage 31A, 31B sont d'un seul tenant avec la platine 25, en formant chacune un prolongement de cette platine 25, en direction du volume interne de l'embase de support 23.

Mais, pour le montage du raidisseur 58, ces dents d'encliquetage 31A, 31B se trouvent interrompues localement, dans leur zone médiane, au droit de celui-ci, par une saignée transversale 63, propre au passage du tiroir nécessaire, lors de ce moulage, à la formation de l'échancrure 59 dudit raidisseur 58.

Dans cette variante de réalisation, enfin la surface externe, au moins, des parois latérales 28A, 28B, 29, 29' est inclinée, en dépouille, pour faciliter le moulage.

La figure 15 concerne, par ailleurs, une variante de réalisation de la tête de liaison 24.

Suivant celle-ci, le corps de cette tête de liaison 24 se réduit à son bossage d'encliquetage 53, qui, comme précédemment, forme une nervure allongée, avec, transversalement, une section en pointe de flèche, à crans de retenue 53A, 53B et pans obliques d'engagement 54A, 54B, propre à coopérer, avec serrage, avec les dents d'encliquetage 31A, 31B de l'embase de support 23 associée.

Mais, la pointe de ladite section y est largement tronquée par un méplat.

Quoi qu'il en soit, la nervure que constitue le bossage d'encliquetage présente une surface plane 52', qui, en substitution au corps 52 précédent, forme une surface d'appui pour le fond 11 de la goulotte 10 à agripper, avec, en saillie sur cette surface plane 52', un bossage de fixation 55 analogue à celui précédemment décrit.

Dans ce qui précède, il a été supposé que, la goulotte 10 devant être implantée parallèlement au sens d'allongement des évidements 18 de la plaque perforée 17, les embases de support 23 mises en œuvre pour cette implantation étaient elles-mêmes rapportées sur cette plaque perforée 17 parallèlement audit sens d'allongement.

Mais, en variante, figure 16 pour une implantation de la goulotte 10 orthogonale par rapport à la précédente, et les dimensions concernées étant établies en conséquence, l'embase de support 23 de chacun des accessoires de fixation 22 mis en œuvre peut, au contraire, être implantée perpendiculairement au sens d'allongement des évidements 18 de la plaque perforée 17, ses pattes de fixation 41A, 41B venant alors se prendre sur les bords opposés d'un même évidement 18 de cette plaque perforée 17, cependant que, ses picots 50A, 50B, 50'A, 50'B coiffent alors, non plus une traverse 20 de cette plaque perforée 17, mais, chacun, une barrette 19 de celle-ci.

Pour le reste, les modalités de mise en œuvre sont, par ailleurs, identiques à celles précédemment décrites.

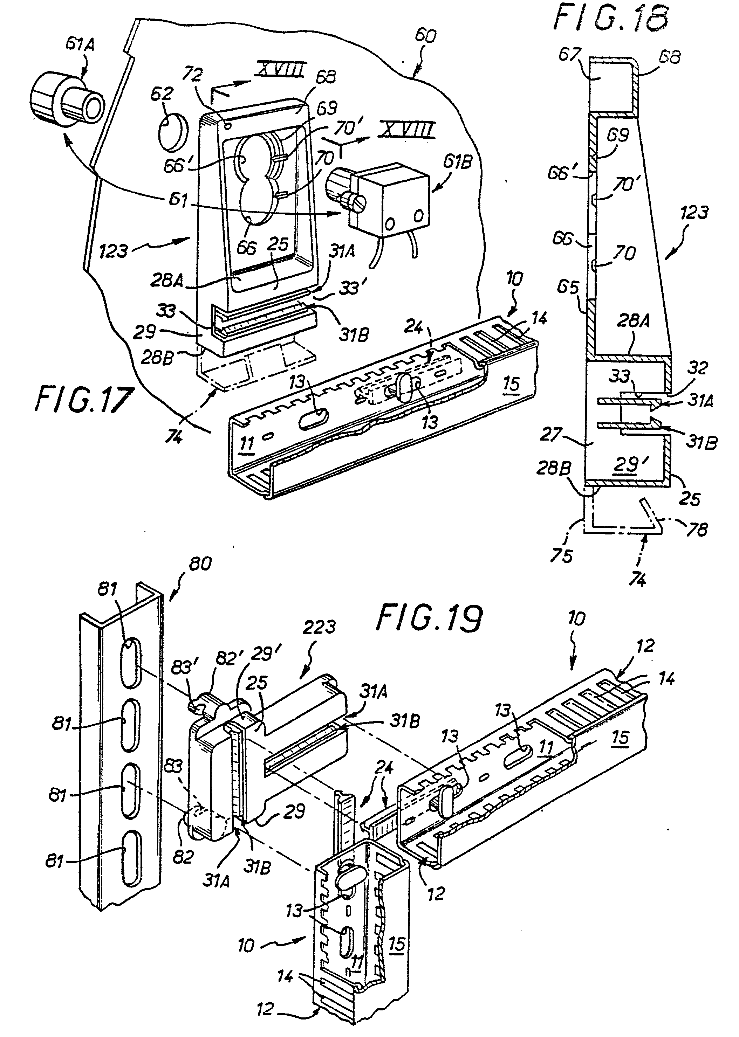

Les figures 17, 18 illustrent l'application de l'invention au cas où le support auquel doit être assujettie la goulotte 10 est formé par la porte 60 de l'armoire électrique à équiper, en vue de la desserte d'un quelconque organe d'équipement électrique 61, qui, constitué de deux éléments distincts, à savoir une tête 61A et un corps 61B, est adapté à être rapporté sur une telle porte 60 par simple pincement de celle-ci, avec traversée d'un passage 62 prévu à cet effet dans cette porte 60.

Il peut s'agir d'un simple voyant lumineux par exemple.

Quoi qu'il en soit, la tête 61A en constitue la seule partie visible de l'extérieur de l'armoire électrique concernée, le corps 61B restant à l'intérieur de celle-ci, et ladite tête 61A est adaptée à venir en prise, par exemple par vissage, sur ledit corps 61B, avec traversée de la porte 60 par le passage 62 de celle-ci et pincement de cette porte 60.

Ces dispositions sont bien connues par elles-mêmes, et ne faisant pas en propre partie de la présente invention, elles ne seront pas décrites plus en détail ici.

Pour l'assujettissement à la porte 60 de la goulotte 10, il est mis en œuvre, suivant l'invention, un accessoire de fixation comportant, d'une part, une embase de support 123, décrite ci-après, et, d'autre part, une tête de liaison 24 identique à celle déjà décrite.

Comme l'embase de support 23 précédente, l'embase de support 123 comporte, en façade, une platine 25, affectée d'une fente 32 qui se prolonge latéralement par des échancrures 33, 33' sur les parois latérales transversales 29, 29' correspondantes.

Intérieurement, et suivant également des dispositions identiques aux précédentes, ou très semblables à celles-ci, elle comporte deux dents d'encliquetage 31A, 31B, qui, dans la forme de réalisation représentée, sont distinctes de sa platine 25, mais qui, en variante, pourraient également être d'un seul tenant avec celle-ci.

Pour son assujettissement à la porte d'armoire 60, l'embase de support 123 présente latéralement une semelle de fixation 65 propre à être assujettie à ladite porte 60 par simple pincement entre les deux éléments 61A, 61B constitutifs de l'organe d'équipement électrique 61 concerné, ladite semelle 65 présentant à cet effet au moins un évidement 66 propre au passage dudit organe d'équipement 61, à la manière du passage 62 de ladite porte 60, ou un emplacement propre à l'implantation d'un tel évidement 66.

Dans la forme de réalisation représentée, la semelle de fixation 65, qui constitue donc le moyen de fixation de l'embase de support 23, s'étend le long de la seule paroi latérale longitudinale 28A de celle-ci, à la base de cette paroi latérale longitudinale 28A.

Outre cette dernière, elle est bordée, d'une part, par des prolongements des parois latérales transversales 29, 29', et, d'autre part, à l'extrémité desdits prolongements, par une banquette 68, qui, dans la forme de réalisation représentée, est creuse, avec son évidement 67 tourné dans le même sens que l'évidement 27 de l'embase de support 123.

Dans la forme de réalisation représentée, la semelle de fixation 65 présente, en pratique, deux évidements 66, 66' échelonnés en hauteur et se recoupant l'un l'autre en huit.

Ces évidements 66, 66', qui sont de contour circulaire, ont sensiblement même diamètre, mais l'un d'eux, et il s'agit en l'espèce de l'évidement 66', est au moins partiellement entouré par une zone de faiblesse 69 permettant de l'agrandir si désiré.

Il s'agit, en pratique, d'une simple saignée établie à distance de sa tranche.

Ainsi qu'il est aisé de le comprendre, cette saignée 69 permet de détacher par simple enfoncement ou découpage, la partie de la semelle de fixation 65 qui se trouve entre elle et le contour de l'évidement 66' qu'elle entoure.

En variante, il pourrait lui être substitué, comme zone de faiblesse, un voile de moindre épaisseur, lui aussi éliminable par simple enfoncement ou découpage.

En outre, sur chacun des évidements 66, 66', débouche, transversalement, une saignée ou encoche 70, 70', pour mise à la masse éventuelle, à l'aide d'une vis prévue à cet effet, de l'organe d'équipement électrique 61 concerné.

Tel qu'illustré, la banquette 68 peut comporter, en façade, au moins un perçage 72, pour des raisons qui apparaîtront ci-après.

Lors de la fixation de l'organe d'équipement électrique 61, la semelle de fixation 65 de l'embase de support 123 est pincée, conjointement avec la porte 60, entre les deux éléments 61A, 61B constitutifs de cet organe d'équipement électrique 61.

Suivant les implantations à respecter, l'organe d'équipement électrique 61 traverse l'un ou l'autre, convenablement choisi et, si nécessaire, élargi lorsqu'il s'agit de l'évidement 66', des évidements 66, 66' que présente à cet effet cette semelle de fixation 65.

Ainsi qu'il est aisé de le comprendre, le choix ainsi fait entre les évidements 66, 66' de la semelle de fixation 65 de l'embase de support 123 permet avantageusement une implantation de l'organe d'équipement électrique 61 suivant l'un ou l'autre de deux entraxes différents par rapport à cette embase de support 123, et donc par rapport à la goulotte 10 ultérieurement assujettie à celle-ci.

Suivant une variante de réalisation non représentée, la semelle de fixation 65 ne comporte par avance aucun évidement 66, 66′ mais un simple emplacement propre à l'implantation d'un tel évidement, pour laisser à l'utilisateur toute liberté à ce sujet.

Quoi qu'il en soit, l'assujettissement d'une goulotte 10 à l'embase de support 123 ainsi constituée se fait suivant des modalités du type de celles précédemment décrites.

Par ailleurs, le perçage 72 que présente la banquette 68 associée à cette embase de support 123 peut être mis à profit, si désiré, pour l'établissement, par pincement, avec un écrou, d'un tirant fileté qui, formant entretoise, permet lui-même l'établissement, parallèlement à la porte 60, par pincement entre deux écrous, d'un écran de protection recouvrant l'ensemble des embases de support 123 mises en œuvre sur cette porte 60 et des goulottes 10 portées par ceux-ci (non représenté).

Par ailleurs, et tel que schématisé en traits interrompus sur les figures 17, 18, l'embase de support 123 peut se prolonger, du côté de sa paroi latérale longitudinale 28B, par un berceau 74, dont le fond 75 est dans le plan de sa semelle de fixation 65, et dont le débouché, en façade, est au moins en partie occulté par une patte élastiquement déformable 78, ledit berceau 74 pouvant être mis à profit pour l'implantation temporaire, avant la pose de la goulotte 10, des câbles ou conducteurs électriques propres à la desserte de l'organe d'équipement électrique 61.

La figure 19 illustre l'application de l'invention à la fixation directe d'une ou plusieurs goulottes 10 à un quelconque montant de châssis 80 présentant, en façade, le long de sa ligne médiane, et suivant un pas régulier, des ouvertures 81 qui, dans la forme de réalisation représentée, sont allongées en boutonnière.

L'accessoire de fixation mis en œuvre à cet effet suivant l'invention comporte, d'une part, une embase de support 223, décrite ci-après, et d'autre part, une tête de liaison 24 identique à celle précédemment décrite.

Pour l'essentiel, l'embase de support 223 est globalement semblable à celle décrite en référence aux figures 1 à 10, avec variante possible suivant celle décrite en référence aux figures 11 à 14.

Mais, au lieu de comporter, dans la zone médiane de ses parois latérales longitudinales 28A, 28B, des pattes de fixation, elle comporte, dans la zone médiane de ses parois latérales transversales 29, 29′, des pieds de fixation 82, 82′ propres à son encliquetage sur le montant de châssis 80, par engagement dans deux ouvertures 81 distinctes du montant de châssis 80.

Par exemple, chacun de ces pieds de fixation 82 peut présenter, transversalement, en direction l'un de l'autre, une saignée 83, 83′, propre à sa venue en prise avec la tranche de l'ouverture 81 correspondante du montant de châssis 80.

En outre, dans la forme de réalisation représentée, l'embase de support 223 comporte des moyens d'encliquetage en double, ou au moins en double, pour l'implantation d'une tête de liaison 24 en l'une quelconque d'au moins deux zones de localisation distinctes sur elle.

En pratique, sa platine 25 étant globalement en forme de T, elle comporte, comme précédemment, d'une part, des dents d'encliquetage 31A, 31B allongées suivant la direction de la ligne médiane de la barre du T ainsi formé par cette platine 25, et, d'autre part, des dents d'encliquetage 31A, 31B allongées suivant la direction médiane du jambage dudit T, et donc suivant une direction orthogonale par rapport à la précédente.

Ainsi, tel qu'illustré, il est possible soit d'implanter, comme mentionné ci-dessus, une goulotte 10 suivant l'une ou l'autre de deux directions orthogonales possibles, l'une parallèle au montant de châssis 80, l'autre perpendiculaire à celui-ci, soit d'implanter, simultanément, suivant respectivement l'une et l'autre de ces deux possibilités, deux goulottes 10 distinctes.

Quoi qu'il en soit, et ainsi qu'il est aisé de le comprendre, lorsqu'une telle goulotte 10 est implantée perpendiculairement au montant de châssis 80, elle peut ainsi s'étendre directement d'un tel montant de châssis 80 au montant de châssis 80 associé à celui-ci, sans établissement préalable, d'un de ces montants de châssis 80 à l'autre, d'un quelconque profilé pour son support.

Bien entendu, la présente invention ne se limite pas aux formes de réalisation décrites et représentées, mais elle englobe toute variante d'exécution et/ou de combinaison de leurs divers éléments.

En outre, et bien qu'il en soit ainsi pour la forme de réalisation préférée plus spécifiquement décrite et représentée, la tête de liaison que comporte l'accessoire de fixation suivant l'invention n'est pas nécessairement allongée.

Il suffit, pour les commodités d'ajustement en position recherchées de préférence, que les moyens d'encliquetage dont est dotée l'embase de support de cet accessoire de fixation soient, eux, allongés.

Enfin, le bossage de fixation que comporte une telle tête de liaison n'est pas non plus nécessairement déporté longitudinalement par rapport à la zone médiane de son corps.

## Revendications

1. Accessoire de fixation propre à l'assujettissement d'un quelconque article, par exemple goulotte ou conduit, à un quelconque support, par exemple plaque perforée, montant de châssis ou porte d'armoire, notamment pour appareillage électrique, caractérisé en ce qu'il est constitué de deux pièces distinctes, à savoir, d'une part, une embase de support (23, 123, 223), qui est munie de moyens de fixation propres à en permettre l'assujettissement au support concerné, et, d'autre part, une tête de liaison (24), qui est munie de moyens de fixation propres à en permettre l'assujettissement à l'article à assujettir audit support, ladite embase de support (23, 123, 223) et ladite tête de liaison (24) étant conjointement dotées de moyens d'encliquetage complémentaires propres à leur assujettissement l'une à l'autre.

2. Accessoire de fixation suivant la revendication 1, caractérisé en ce que les moyens d'encliquetage dont est dotée l'embase de support (23, 123, 223) sont allongés, en sorte que, tout en étant assujettie par eux à ladite embase de support, ladite tête de liaison (24) peut se déplacer librement par rapport à celle-ci, parallèlement à leur sens d'allongement.

3. Accessoire de fixation suivant la revendication 1, caractérisé en ce que les moyens d'encliquetage complémentaires dont sont dotées l'embase de support (23, 123, 223) et la tête de liaison (24) comportent, pour l'embase de support (23, 123, 223), deux dents d'encliquetage (31A, 31B), dont une au moins est élastiquement déformable, et, pour la tête de liaison (24), un bossage d'encliquetage (53) propre à coopérer avec lesdites dents d'encliquetage (31A, 31B).

4. Accessoire de fixation suivant les revendications 2 et 3, prises conjointement, caractérisé en ce que, étant allongées, les dents d'encliquetage (31A, 31B) que comporte l'embase de support (23, 123, 223) forment les lèvres d'une fente.

5. Accessoire de fixation suivant la revendication 4 caractérisé en ce que, à l'une au moins des extrémités de ladite fente, et de préférence à chacune de celles-ci, l'embase de support (23, 123, 223) présente transversalement une banquette de raidissement (39, 39').

6. Accessoire de fixation suivant l'une quelconque des revendications 1 à 5, caractérisé en ce que l'embase de support (23, 123, 223) comporte intérieurement un raidisseur (58).

7. Accessoire de fixation suivant l'une quelconque des revendications 3, 4, caractérisé en ce que, l'embase de support (23, 123, 223) formant en façade une platine (25), pour appui de l'article à assujettir au support concerné, les dents d'encliquetage (31A, 31B) qu'elle comporte sont en retrait par rapport à ladite platine (25).

8. Accessoire de fixation suivant la revendication 7, caractérisé en ce que lesdites dents d'encliquetage (31A, 31B) sont distinctes de ladite platine (25), en étant dirigées vers celle-ci à compter du volume intérieur de l'embase de support (23, 123, 223).

9. Accessoire de fixation suivant la revendication 8, caractérisé en ce que lesdites dents d'encliquetage (31A, 31B) sont d'un seul tenant avec ladite platine (25), en formant chacune un prolongement de celle-ci en direction du volume intérieur de l'embase de support (23, 123, 223).

10. Accessoire de fixation suivant les revendications 6 et 9, prises conjointement, caractérisé en ce que les dents d'encliquetage (31A, 31B) sont interrompues localement, dans leur zone médiane, par une saignée transversale (63) au droit du raidisseur (58).

11. Accessoire de fixation suivant l'une quelconque des revendications 3 à 10, caractérisé en ce que les deux dents d'encliquetage (31A, 31B) que comporte l'embase de support (23, 123, 223) sont l'une et l'autre élastiquement déformables.

12. Accessoire de fixation suivant l'une quelconque des revendications 1 à 11, caractérisé en ce que l'embase de support (223) comporte des moyens d'encliquetage au moins en double, pour implantation d'une tête de liaison (24) en l'une quelconque d'au moins deux zones de localisation distinctes sur elle.

13. Accessoire de fixation suivant les revendications 2 et 12, prises conjointement, caractérisé en ce que les moyens d'encliquetage dont est dotée l'embase de support (223) sont allongés suivant deux directions différentes, et par exemple suivant deux directions orthogonales l'une par rapport à l'autre.

14. Accessoire de fixation suivant l'une quelconque des revendications 1 à 13, caractérisé en ce que, pour assujettissement à une plaque perforée, l'embase de support (23) comporte au moins deux pattes de fixation (41A, 41B), propres à son encliquetage sur une telle plaque perforée, l'une au moins desdites pattes (41A, 41B) étant à cet effet élastiquement déformable.

15. Accessoire de fixation suivant la revendication 14, caractérisé en ce que, sur sa surface inférieure, l'embase de support (23) présente en saillie au moins une paire de picots (50A, 50B, 50'A, 50'B), pour son engagement sur une quelconque traverse ou barrette de la plaque perforée concernée.

16. Accessoire de fixation suivant l'une quelconque des revendications 1 à 13, caractérisé en ce que, pour assujettissement à un montant de châssis, l'embase de support (223) comporte au moins deux pieds de fixation (82, 82') propres à son encliquetage sur un tel montant de châssis.

17. Accessoire de fixation suivant l'une quelconque des revendications 1 à 13, caractérisé en ce que, pour assujettissement à une porte d'armoire électrique, l'embase de support (123) présente latéralement une semelle de fixation (65) propre à être assujettie à ladite porte par simple pincement entre deux éléments constitutifs d'un quelconque organe d'équipement, voyant lumineux par exemple, à rapporter sur celle-ci, ladite semelle (65) présentant à cet effet au moins un évidement (66, 66') propre au passage dudit organe d'équipement, ou un emplacement propre à l'implantation d'un tel évidement.

18. Accessoire de fixation suivant la revendication 17, caractérisé en ce que ladite semelle (65) présente deux évidements (66, 66') échelonnés en hauteur.

19. Accessoire de fixation suivant la revendication 18, caractérisé en ce que lesdits évidements (66, 66') se recoupent l'un l'autre en huit.

20. Accessoire de fixation suivant l'une quelconque des revendications 18, 19, caractérisé en ce que l'un au moins desdits évidements (66, 66') est au moins partiellement entouré par une zone de faiblesse (69) permettant de l'agrandir.

21. Accessoire de fixation suivant la revendication 4, caractérisé en ce que, étant lui aussi allongé, le bossage d'encliquetage (53) que comporte la tête de liaison (24) forme une nervure.

22. Accessoire de fixation suivant la revendication 21, caractérisé en ce que ladite nervure s'étend en saillie sur une réglette formant le corps (52) de la tête de liaison (24).

23. Accessoire de fixation suivant l'une quelconque des revendications 1 à 20, caractérisé en ce que, pour assujettissement à l'article à assujettir au support concerné, la tête de liaison (24) comporte, en saillie sur une surface plane (52'), un bossage de fixation (55) qui se raccorde à ladite surface plane (52') par un col (57) qui est propre, d'abord à son engagement sur ledit article à la faveur d'une ouverture (13) prévue à cet effet sur celui-ci, puis à sa venue en prise avec ledit article, par simple rotation d'un quart de tour par rapport à celui-ci après un tel engagement.

24. Accessoire de fixation suivant les revendications 21 à 23, prises conjointement, caractérisé en ce que le bossage de fixation (55) que comporte la tête de liaison (24) s'étend transversalement par rapport à son bossage d'encliquetage (53).

25. Accessoire de fixation suivant l'une quelconque des revendications 23, 24, caractérisé en ce que le bossage de fixation que comporte la tête de liaison (24) est décalé longitudinalement par rapport à la zone médiane de son bossage d'encliquetage (53).

**Claims**

1. A fixing accessory for securing any article, for example a channel or conduit, to any support, for example a perforated plate, a chassis upright or a cabinet door, in particular for electrical equipment, characterised in that it is formed by two separate parts, namely on the one hand a support base (23, 123, 223) which is provided with fixing means to permit securing thereof to the support in question and, on the other hand, a connecting head (24) which is provided with fixing means for permitting securing thereof to the article to be secured to said support, said support base (23, 123, 223) and said connecting head (24) being jointly provided with complementary latching means for securing them to each other.

2. A fixing accessory according to claim 1 characterised in that the latching means with which the support base (23, 123, 223) is provided are elongated in such a way that, while being secured thereby to said support base, said connecting head (24) can be displaced freely with respect thereto, parallel to the direction in which they are elongated.

3. A fixing accessory according to claim 1 characterised in that the complementary latching means with which the support base (23, 123, 223) and the connecting head (24) are provided comprise, for the support base (23, 123, 223), two latching teeth (31A, 31B) of which one at least is elastically deformable, and, for the connecting head (24), a latching boss (53) co-operable with said latching teeth (31A, 31B).

4. A fixing accessory according to claims 2 and 3 in combination characterised in that, being elongated, the latching teeth (31A, 31B) with which the support base (23, 123, 223) is provided form the lips of a slot.

5. A fixing accessory according to claim 4 characterised in that at one at least of the ends of said slot and preferably at each thereof the support base (23, 123, 223) is provided transversely with a stiffening ledge (39, 39').

6. A fixing accessory according to any one of claims 1 to 5 characterised in that the support base (23, 123, 223) comprises a stiffening means (58) in its interior.

7. A fixing accessory according to either one of claims 3 and 4 characterised in that the support base (23, 123, 223) forming at the front a plate (25) for supporting the article to be secured to the support in question, the latching teeth (31A, 31B) with which it is provided are set back with respect to said plate (25).

8. A fixing accessory according to claim 7 characterised in that said latching teeth (31A, 31B) are separate from said plate (25), being directed theretowards from the internal volume of the support base (23, 123, 223).

9. A fixing accessory according to claim 8 characterised in that said latching teeth (31A, 31B) are in one piece with said plate (25), each forming an extension thereof towards the internal volume of the support base (23, 123, 223).

10. A fixing accessory according to claims 6 and 9 in combination characterised in that the latching teeth (31A, 31B) are interrupted locally in their central zone by a transverse groove (63) at right angles to the stiffening means (58).

11. A fixing accessory according to any one of claims 3 to 10 characterised in that the latching teeth (31A, 31B) with which the support base (23, 123, 223) is provided are both elastically deformable.

12. A fixing accessory according to any one of claims 1 to 11 characterised in that the support base (223) comprises at least double latching means for engagement of a connecting head (24) in any one of at least two separate localisation zones thereon.

13. A fixing accessory according to claims 2 and 12 in combination characterised in that the latching means with which the support base (223) is provided are elongated in two different directions and for example in two directions which are orthogonal with respect to each other.

14. A fixing accessory according to any one of claims 1 to 13 characterised in that, for securing to a perforated plate, the support base (23) comprises at least two fixing lugs (41A, 41B) for latching same to such a perforated plate, one at least of said lugs (41A, 41B) being elastically deformable for that purpose.

15. A fixing accessory according to claim 14 characterised in that, on its downward surface, the support base (23) is provided in projecting relationship with at least one pair of pegs (50A, 50B, 50'A, 50'B) for engagement thereof on to any transverse member or bar portion of the perforated plate in question.

16. A fixing accessory according to any one of claims 1 to 13 characterised in that, for securing to a chassis upright, the support base (223) comprises at least two fixing legs (82, 82') for latching thereof to such a chassis upright.

17. A fixing accessory according to any one of claims 1 to 13 characterised in that, for securing to an electrical cabinet door, the support base (123) is laterally provided with a fixing plate (65) for being secured to said door by being simply gripped between two elements making up any item of equipment, for example signal lamp, to be fitted to said door, said plate (65) being provided for that purpose with at least one opening (66, 66') for said item of equipment to pass therethrough, or a location for the provision of such an opening.

18. A fixing accessory according to claim 17 characterised in that said plate (65) has two openings (66, 66') which are displaced in respect of height.

19. A fixing accessory according to claim 18 characterised in that said openings (66, 66') intersect each other to define an eight-like configuration.

20. A fixing accessory according to either one of claims 18 and 19 characterised in that one at least of said openings (66, 66') is at least partially surrounded by a weakened zone (69) permitting it to be increased in size.

21. A fixing accessory according to claim 4 characterised in that the latching boss (53) with which the connecting head (24) is provided, also being elongated, forms a rib.

22. A fixing accessory according to claim 21 characterised in that said rib extends in projecting relationship on a strip portion forming the body (52) of the connecting head (24).

23. A fixing accessory according to any one of claims 1 to 20 characterised in that, for securing to the article to be secured to the support in question, the connecting head (24) is provided in projecting relationship on a flat surface (52') with a fixing boss (55) which is connected to said flat surface (52') by a neck portion (57) which is adapted firstly for engagement thereof on said article by means of an opening (13) provided for that purpose therein, and then for the interengagement thereof with said article by simple rotation through a quarter of a turn with respect thereto after such engagement.

24. A fixing accessory according to claims 21 to 23 in combination characterised in that the fixing boss (55) with which the connecting head (24) is provided extends transversely with respect to its latching boss (53).

25. A fixing accessory according to any one of claims 23 and 24 characterised in that the fixing boss with which the connecting head (24) is provided is displaced longitudinally with respect to the central zone of its latching boss (53).

**Patentansprüche**

1. Befestigungsmittel zum Befestigen eines Gegenstandes, beispielsweise einer Rinne oder eines Leiters, an einem beliebigen Träger, beispielsweise einer Lochplatte, einem Ständer eines Chassis oder einer Gehäusetür, besonders für elektrische Einrichtungen, dadurch gekennzeichnet, daß es aus zwei gesonderten Teilen besteht, nämlich einerseits einem Halter (23, 123, 223), der mit Befestigungsmitteln versehen ist, welche seine Anbringung am betreffenden Träger ermöglichen, und andererseits einem Verbindungskopf (24), der mit Befestigungsmitteln versehen ist, die seine Anbringung an dem am Träger zu befestigenden Gegenstand ermöglichen, wobei der Halter (23, 123, 223) und der Verbindungskopf (24) jeweils mit komplementären Einrastmitteln versehen sind, die zu ihrer Befestigung aneinander dienen.

2. Befestigungsmittel nach Anspruch 1, dadurch gekennzeichnet, daß die Einrastmittel des Halters (23, 123, 223) länglich ausgebildet sind, so daß der Verbindungskopf (24) auch nach seiner Befestigung am Halter durch diese Einrastmittel in Richtung ihrer länglichen Ausbildung parallel zum Halter verschiebbar ist.

3. Befestigungsmittel nach Anspruch 1, dadurch gekennzeichnet, daß die komplementären Einrastmittel mit denen der Halter (23, 123, 223) und der Verbindungskopf (24) versehen sind, am Halter (23, 123, 223) zwei Rastzähne (31A, 31B), von denen mindestens einer elastisch verformbar ist, und am Verbindungskopf (24) einen Rastvorsprung (53), der mit den Rastzähnen (31A, 31B) zusammenwirkt, aufweisen.

4. Befestigungsmittel nach den Ansprüchen 2 und 3 zusammengenommen, dadurch gekennzeichnet, daß die am Halter (23, 123, 223) ausgebildeten länglichen Rastzähne (31A, 31B) die Lippen eines Schlitzes bilden.

5. Befestigungsmittel nach Anspruch 4, dadurch gekennzeichnet, daß mindestens an einem der Enden des Schlitzes und vorzugsweise an jedem seiner Enden der Halter (23, 123, 223) in Querrichtung eine versteifende Randleiste (39 ; 39') aufweist.

6. Befestigungsmittel nach einem der Ansprüche 1 bis 5, dadurch gekennzeichnet, daß der Halter (23, 123, 223) innen eine Versteifung (58) aufweist.

7. Befestigungsmittel nach einem der Ansprüche 3, 4, dadurch gekennzeichnet, daß der Halter (23, 123, 223) an seiner Vorderseite eine Platine (25) zum Andrücken des am betreffenden Träger zu befestigenden Gegenstandes aufweist und die Rastzähne (31A, 31B) des Halters bezüglich dieser Platine (25) zurückgesetzt sind.

8. Befestigungsmittel nach Anspruch 7, dadurch gekennzeichnet, daß die Rastzähne (31A, 31B) von der Platine (25) abgesetzt und vom Innenraum des Halters (23, 123, 223) gesehen auf die Platine hin gerichtet sind.

9. Befestigungsmittel nach Anspruch 8, dadurch gekennzeichnet, daß die Rastzähne (31A, 31B) einstückig mit der Platine (25) ausgebildet sind, indem sie jedereine Verlängerung derselben in Richtung auf den Innenraum des Halters (23, 123, 223) bilden.

10. Befestigungsmittel nach den Ansprüchen 6 und 9 zusammengenommen, dadurch gekennzeichnet, daß die Rastzähne (31A, 31B) in ihrem Mittelbereich örtlich im Bereich der Versteifung (58) durch einen Quereinschnitt (63) unterbrochen sind.

11. Befestigungsmittel nach einem der Ansprüche 3 bis 10, dadurch gekennzeichnet, daß die zwei Rastzähne (31A, 31B) des Halters (23, 123, 223) beide elastisch verformbar sind.

12. Befestigungsmittel nach einem der Ansprüche 1 bis 11, dadurch gekennzeichnet, daß der Halter (223) mindestens in doppelter Ausführung Einrastmittel zum Einsetzen eines Verbindungskopfes (24) in einem von mindestens zwei örtlich voneinander getrennten Bereichen des Halters aufweist.

13. Befestigungsmittel nach den Ansprüchen 2 und 12 zusammengenommen, dadurch gekennzeichnet, daß die Einrastmittel des Halters (223) in zwei verschiedenen Richtungen länglich ausgebildet sind, beispielsweise in zwei zueinander senkrechten Richtungen.

14. Befestigungsmittel nach einen der Ansprüche 1 bis 13, dadurch gekennzeichnet, daß der Halter (23) zur Befestigung an einer Lochplatte mindestens zwei Befestigungsnasen (41A, 41B) aufweist, mit deren Hilfe er an einer solchen Lochplatte einrastbar ist, wobei mindestens die eine der Nasen (41A, 41B) zu diesem Zweck elastisch verformbar ist.

15. Befestigungsmittel nach Anspruch 14, dadurch gekennzeichnet, daß der Halter (23) an seiner unteren Fläche mindestens ein Paar von Dornvorsprüngen (50A, 50B, 50'A, 50'B) zum Eingreifen an einer Querstrebe oder einem Steg der betreffenden Lochplatte aufweist.

16. Befestigungsmittel nach einem der Ansprüche 1 bis 13, dadurch gekennzeichnet, daß der Halter (223) zu seiner Befestigung an einem Chassisständer mindestens zwei Befestigungsfüsse (82, 82') trägt, die an einem solchen Chassisständer einrasten können.

17. Befestigungsmittel nach einem der Ansprüche 1 bis 13, dadurch gekennzeichnet, daß zur Befestigung an einer Schaltschranktür der Halter (123) seitlich eine Fußplatte (65) aufweist, die an der Tür durch einfaches Einklemmen zwischen zwei Elementen befestigbar ist, die eine beliebige an der Tür anzubringende Vorrichtung der Anlage, z. B. Signalleuchten bilden, wobei die Fußplatte (65) zu diesem Zweck mindestens eine Ausnehmung (66, 66') für den Durchtritt der Vorrichtung der Anlage oder einen zum Einarbeiten einer solchen Ausnehmung geeigneten Platz aufweist.

18. Befestigungsmittel nach Anspruch 17, dadurch gekennzeichnet, daß die Fußplatte (65) zwei in der Höhe versetzte Ausnehmungen (66, 66') aufweist.

19. Befestigungsmittel nach Anspruch 18, dadurch gekennzeichnet, daß die Ausnehmungen (66, 66') sich überschneiden, so daß ein Umriß in Form einer Acht entsteht.

20. Befestigungsmittel nach einem der Ansprüche 18, 19, dadurch gekennzeichnet, daß mindestens eine der Ausnehmungen (66, 66') mindestens teilweise von einem Bereich geringerer Wandstärke (69) umgeben und durch Herausbrechen dieses Bereiches vergrößerbar ist.

21. Befestigungsmittel nach Anspruch 4, dadurch gekennzeichnet, daß der ebenfalls länglich ausgebildete Rastvorsprung (53), den der Verbindungskopf (24) aufweist, eine Rippe bildet.

22. Befestigungsmittel nach Anspruch 21, dadurch gekennzeichnet, daß sich die Rippe vorspringend an einem den Körper (52) des Verbindungskopfes (24) bildenden Stab erstreckt.

23. Befestigungsmittel nach einem der Ansprüche 1 bis 20, dadurch gekennzeichnet, daß der Verbindungskopf (24) zum Anbringen an dem am Träger zu haltenden Gegenstand einen von einer ebenen Fläche (52') vorspringenden Befestigungsriegel (55) aufweist, der mit der ebenen Fläche (52') durch einen Hals (57) verbunden ist und dadurch zunächst durch eine am Gegenstand vorgesehene Öffnung (13) in Eingriff mit diesem kommen und nach Herstellung dieses Eingriffs durch einfache Drehung um 90° bezüglich des Gegenstandes an diesem verriegelbar ist.

24. Befestigungsmittel nach den Ansprüchen 21 bis 23 zusammengenommen, dadurch gekennzeichnet, daß der vom Verbindungskopf (24) getragene Befestigungsriegel (55) sich quer zu seinem Rastvorsprung (53) erstreckt.

25. Befestigungsmittel nach einem der Ansprüche 23, 24, dadurch gekennzeichnet, daß der vom Verbindungskopf (24) getragene Befestigungsriegel bezüglich des Mittelbereiches seines Rastvorsprungs (53) in Längsrichtung verschoben ist.

FIG.1

FIG.9

*FIG.5*

*FIG.4*

*FIG.2*

*FIG.3*

*FIG.7*

*FIG.6*

*FIG.8*

0 169 289

FIG.10

FIG.11

FIG.14

FIG.13

FIG.12

FIG.15

FIG.16

3

0 169 289

FIG.17

FIG.18

FIG.19

4